# EUROPEAN PATENT APPLICATION

(11) **EP 4 198 810 A1**
(43) Date of publication of application: **21.06.2023**
(21) Application number: 21306853.9
(22) Date of filing: 20.12.2021
(51) Int. Cl.: G06F 40/35, G06F 40/171, G06F 3/0354

(54) **CHATBOT SYSTEMS AND METHODS USING DYNAMIC FEATURES OF HANDWRITING**

(71) Applicant: Société BIC, 92110 Clichy (FR)
(72) Inventor: Duffy, David, 8003 Zürich (CH); Lau, Wai Keith, 1015 Lausanne (CH)
(74) Representative: Peterreins Schley

(57) **Abstract**

The present specification relates to a computer-implemented method for a chatbot, comprising producing at least one chatbot statement, outputting, via a user interface of a chatbot system, the at least one chatbot statement to prompt at least one input statement from a user, receiving the at least one input statement from the user via the user interface, wherein the user interface comprises a smart pen and the at least one input statement is received via the smart pen, producing at least one further chatbot statement, and outputting, via the user interface, the at least one further chatbot statement, wherein receiving the at least one input statement from the user via the smart pen comprises capturing a handwriting of the user, and wherein the method comprises determining at least one dynamic feature of the handwriting of the user, and wherein producing the at least one further chatbot statement is at least in part based on the at least one dynamic feature of the handwriting of the user.

## Description

### TECHNICAL FIELD

This specification relates to a computer-implemented method for a chatbot and to a chatbot system.

### BACKGROUND

Retaining dynamic features of handwriting of a user allows for assessing the user based on non-textual (or non-verbal) contents of her or his written input. In fact, as an example, it is known that dynamic features such as measures of stroke distance, applied pressure and stroke duration extracted from the user writing by hand e.g. in a digital pen system can be used to estimate the expertise of the user in the domain she or he is writing about. Along the same lines, it is possible to infer other attributes such as a level of confidence and/or a given emotional state of the user from her or his handwriting. While some of the dynamic features may easily be interpreted by a human reader, pre-trained machine learning algorithms are capable of also assessing subtler dynamic features.

In recent years, means of style transfer have evolved in the realm of natural language processing. Style transfer aims at changing a style of a text while maintaining its linguistic meaning. As an example, a text written in an impolite style (e.g. an online review) can be converted to another text conveying the same message but cast into a neutral or polite style. Such transformations may rely on auto-encoders which can be a class of neural networks configured to create in an encoding step a reduced and/or abstract representation of the text that is to be mapped in a decoding step to an output text. In contrast to standard auto-encoders that are trained by providing the input text also as the output text, auto-encoders for style transfer are trained by providing style-transformed input texts as the output texts.

A chatbot is known to be a conversational system/method which allows the user to interact with a computer via a natural language interface. The chatbot may apply artificial intelligence (e.g. machine learning) that simulates and/or imitates a (human) conversation. It can also be a process for selecting questions and corresponding answers based on responses from the user.

### SUMMARY

According to a first aspect, there is provided a computer-implemented method for operating a chatbot. The method comprises producing at least one chatbot statement. The method further comprises outputting, via a user interface of a chatbot system, the at least one chatbot statement to prompt at least one input statement from a user. The method further comprises receiving the at least one input statement from the user via the user interface. The method further comprises producing at least one further chatbot statement. The method further comprises outputting, via the user interface, wherein the user interface comprises a smart pen and the at least one input statement is received via the smart pen, the at least one further chatbot statement. Receiving the at least one input statement from the user via the smart pen comprises capturing a handwriting of the user. The method further comprises determining at least one dynamic feature of the handwriting of the user. Producing the at least one further chatbot statement is at least in part based on the at least one dynamic feature of the handwriting of the user.

According to a second aspect, there is provided a chatbot system. The chatbot system comprises a user interface configured to enable a user of the chatbot system to interact with the chatbot system via handwriting. The chatbot system may further be configured to run the computer-implemented method for operating a chatbot according to the method of the first aspect (or an embodiment thereof). The chatbot system and/or the user interface comprises a handwriting instrument including a body extending longitudinally between a first end and a second end, the first end having a writing tip which is able to write on a support, the handwriting instrument further including at least one motion sensor configured to acquire data on the handwriting of the user when the user is using the handwriting instrument, The chatbot system and/or the user interface may comprise a calculating unit communicating with the motion sensor and configured to analyze the data by an artificial intelligence model trained to capture the user's handwriting and/or to determine at least one dynamic feature of the handwriting of the user. The handwriting instrument may be the smart pen.

Dependent embodiments of the aforementioned aspects are given in the dependent claims and explained in the following description, to which the reader should now refer.

The method of the first aspect (or an embodiment thereof) and the corresponding chatbot system of the second aspect (or an embodiment thereof) are directed towards providing chatbot functionality wherein a user of the chatbot system interacts via her or his handwriting. Capturing not just the handwriting of the user but also a dynamic (or the dynamic features) of the handwriting allows for assessing how the handwritten text of the user has been written. For example, such information may relate to a level of competence of the user, a level of confidence of the user, and/or to an emotional state of the user. It may also relate to certain meanings, styles and/or tones of the handwritten text. In general, it can be hard, e.g. for human readers, to identify such information based on the dynamic (or the dynamic features) of the handwriting of the user. On the other hand, pre-trained machine learning algorithms are capable of extracting the aforementioned information based on rather subtle dynamic features. Any such information, also referred to as (user) qualities, can be used to produce chatbot statements that are tailored to the user in her or his current state. In so doing, the chatbot conversation can be personalized to suit the user during the chatbot conversation. This may contribute to rendering the chatbot conversation, sometimes perceived as mechanical, as realistic as possible and thus to engaging or at least enhance engagement of the user in the chatbot conversation. The method is thus designed to enable a user specific tailored chatbot education system.

As an example, the user of the chatbot system may be a pupil or a student, be it an infant or an adult, tasked to interact with the chatbot system, for example, in order to answer questions posed by the chatbot e.g. in a tutorial. In this case, the chatbot is a tutor and the user a tutee. The dynamic of the handwriting of the user may reveal information about their understanding or level of competence (or expertise). Such information may be used to direct the tutorial so as to increase a learning effect for the user. Such chatbot conversation may therefore be applied in self-study, teaching and/or education. This may be useful for autodidactic learners or when supervision (e.g. a teacher) is out of reach, the latter a circumstance typically encountered during homework, remote schooling and/or silent study sessions. As an example, in case, the chatbot system figures out that the user has a hard time answering a given question, the chatbot system may assist the user in giving an appropriate hint on how to answer the question correctly.

Conventionally or frequently, a tutorial is assessed or evaluated merely based on correct answers and/or mistakes. In addition, some outer factors such as a duration of completing the tutorial may be taken into account. On the other hand, recording and assessing dynamic features (or user qualities), as the tutorial progresses can be beneficial in that the record provides an additional handle for analyzing the tutorial even after its completion e.g. for identifying problematic educational subjects. Again, such can be used in self-study, teaching and/or education. As an example, a teacher may not have the time to supervise all pupils at once. On the other hand, if need be, the teacher may resort to the record corresponding to the tutorial of a pupil in order to assist the pupil on how to make an improvement next time.

### FIGURES DESCRIPTION

**Fig. 1** schematically illustrates a computer-implemented method according to the first aspect (or an embodiment thereof) for a chatbot.
**Fig. 2** schematically illustrates a chatbot system according to the second aspect (or an embodiment thereof).
**Fig. 3a** schematically illustrates an embodiment of a tutorial list.
**Fig. 3b** schematically illustrates an embodiment of a tutorial list.
**Fig. 4a** schematically illustrates an embodiment of the computer-implemented method according to the first aspect for a chatbot based on a tutorial list.
**Fig. 4b** schematically illustrates an embodiment of the computer-implemented method according to the first aspect for a chatbot based on a tutorial list and using style transformation.
**Fig. 5** illustrates an example of a chatbot system.
**Fig. 6** shows an illustration of an example system for capturing a handwriting of the user.
**Fig. 7** shows a block schema of the system illustrated in figure 6.
**Fig. 8** shows an illustration of an example system for determining at least one dynamic feature of the handwriting.
**Fig. 9** shows a block schema of the system illustrated in figure 8.
**Fig. 10** shows an illustration of an example system for determining at least one dynamic feature of the handwriting.
**Fig. 11** shows an illustration of an example system for determining at least one dynamic feature of the handwriting.
**Fig. 12** shows an illustration of an example system for determining at least one dynamic feature of the handwriting.
**Fig. 13** shows a block diagram illustrating the training phase of the neural network in a method using the systems disclosed herein.
**Fig. 14** shows a block diagram illustrating the training phase of the neural network in a method using the systems disclosed herein.
**Fig. 15a****-c** illustrate block diagrams of the collect phase, training phase and inference phase of the trained neural network.

### DETAILED DESCRIPTION

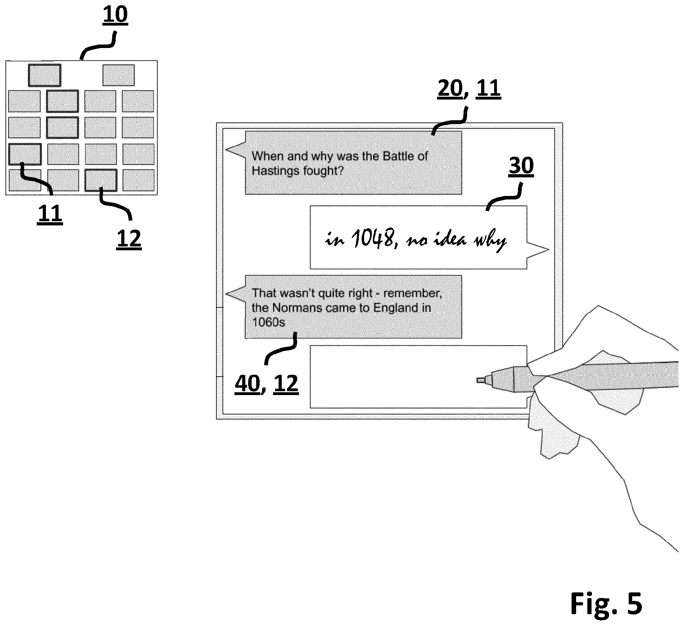

The method 100 of the first aspect (or an embodiment thereof) and the corresponding chatbot system 200 of the second aspect (or an embodiment thereof) aim to provide chatbot functionality wherein a user of the chatbot system 200 interacts via her or his handwriting. As an example, and as illustrated in **Fig. 5**, the chatbot conversation may be a tutorial for a pupil or a student (hereinafter referred to as the user). Based on a tutorial list 10 comprising (predetermined) questions 11, corresponding (predetermined) target answers 13 and/or corresponding (predetermined) hints 12, the chatbot conversation may start with a question 11 (e.g. "When and why was the Battle of Hastings fought?") posed in terms of a chatbot statement 20 by the chatbot system 200. Subsequently, the user may interact with the chatbot system 200 via an input statement 30 (e.g. "in 1048, no idea why") from the user. Depending on the input statement 30, i.e. on the answer from the user, the chatbot may issue a further chatbot statement 40 comprising either a hint 12 ("That wasn't quite right - remember, the Normans came to England in 1060s") on how to correctly answer the question 11 or another question 11.

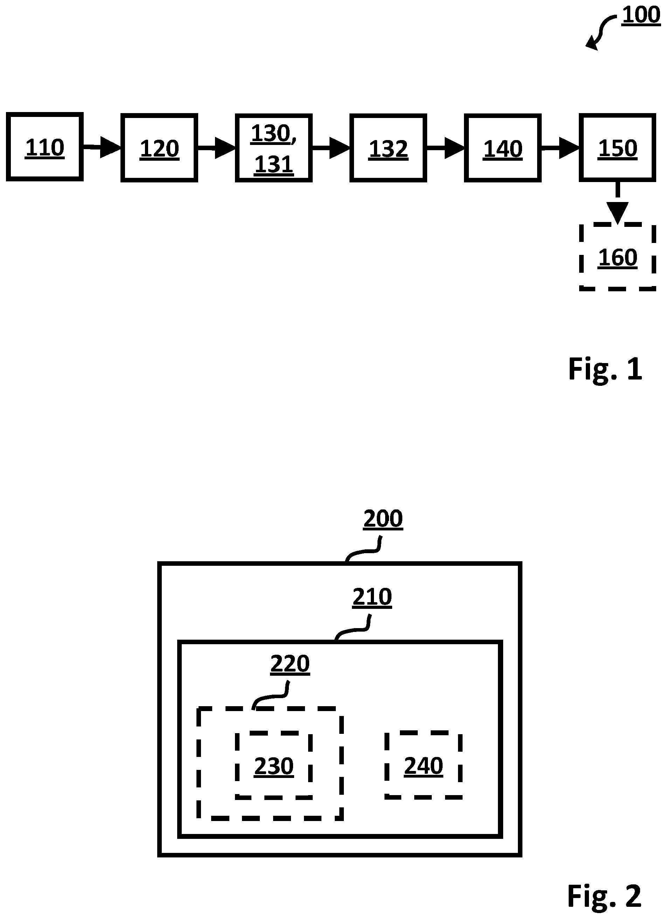

The computer-implemented method 100 for (operating) a chatbot, comprises producing 110 at least one chatbot statement 20. The method 100 further comprises outputting 120, via a user interface 210 of a chatbot system 200, the at least one chatbot statement 20 to prompt at least one input statement 30 from a user. The method 100 further comprises receiving 130 the at least one input statement 30 from the user via the user interface, wherein the user interface 210 comprises a smart pen and the at least one input statement 30 is received 130 via the smart pen. The method 100 further comprises producing 140 at least one further chatbot statement 40. The method 100 further comprises outputting 150, via the user interface, the at least one further chatbot statement 40. Receiving 130 the at least one input statement 30 from the user via the smart pen comprises capturing 131 a handwriting of the user. The method 100 further comprises determining 132 at least one dynamic feature 31 of the handwriting of the user. Producing 140 the at least one further chatbot statement 40 is at least in part based on the at least one dynamic feature 31 of the handwriting of the user. Additionally or alternatively, producing 140 the at least one further chatbot statement 40 may also be based on the at least one input statement 30. In so doing, the computer-implemented method 100 can be seen as a building block that upon repetition 160 gives rise to a chatbot conversation, wherein the user of the chatbot system 200 communicates via her or his handwriting. The computer-implemented method 100 is schematically illustrated in **Fig. 1**.

In an embodiment, capturing 131 the handwriting of the user may comprise recording, as the handwriting of the user progresses, at least one time series of data of one or more sensors 230 of the user interface 210, and applying the at least one time series of data of the one or more sensors to a handwriting-to-text algorithm configured to recognize a text represented by the handwriting, thereby capturing 131 the handwriting. The recognized text may be a string of characters in a character encoding (e.g. ASCII).

Recognizing the text represented by the handwriting may comprise segmenting the at least one time series of data of the one or more sensors 230 into one or more handwriting portions representing, in the handwriting, one or more sentences, one or more words, and/or one or more characters. As an example, segmenting the at least one time series of data of the one or more sensors 230 into one or more handwriting portions may be based on recognizing gaps in timestamps of the time series of data and/or via machine learning clustering.

The one or more handwriting portions can be identified with the one or more sentences (e.g. each handwriting portion can be a sentence), the one or more words (e.g. each handwriting portion can be a word), and/or the one or more characters (e.g. each handwriting portion can be a character) based on a predetermined mapping, thereby recognizing the text.

The handwriting-to-text algorithm may comprise at least one machine learning algorithm configured and trained for recognizing the text. The at least one machine learning algorithm may e.g. be a neural network or a convolutional neural network that has been trained on a training data set (supervised learning).

In examples, in case of segmenting the at least one time series of data of the one or more sensors 230, the handwriting-to-text algorithm may comprise at least one machine learning algorithm configured and trained for segmenting the at least one time series of data of the one or more sensors 230 into the one or more handwriting portions representing, in the handwriting, the one or more sentences, the one or more words, and/or the one or more characters.

In examples, the handwriting-to-text algorithm may comprise at least one machine learning algorithm configured and trained for identifying the one or more handwriting portions with the one or more sentences, the one or more words, and/or the one or more characters.

In examples, determining 132 the at least one dynamic feature 31 of the handwriting of the user may comprise applying the at least one time series of data of the one or more sensors 230 to a writing dynamics algorithm configured to determine one or more dynamic features 31 of the handwriting of the user, thereby outputting a writing dynamics vector, wherein entries of the writing dynamics vector correspond to respective one of the one or more dynamic features 31 of the handwriting of the user. As an example, one of the one or more sensors 230 can be a pressure sensor configured to measure, as writing (i.e. the handwriting of the user) progresses, one or more writing pressures, and e.g. wherein the writing dynamics algorithm is configured to compute an average writing pressure over the writing pressures used in the handwriting, thereby yielding a dynamic feature 31 of the handwriting of the user. In other words, a (or the) dynamic feature may, for example, be the average writing pressure. In examples, the one or more writing pressures from the pressure sensor may (also) be used in the handwriting-to-text algorithm, i.e. for recognizing the text.

In examples, the one or more sensors 230 and/or the dynamics algorithm may be configured to measure, as writing (i.e. the handwriting of the user) progresses, one or more stroke lengths and to compute an average stroke length over the one or more stroke lengths used in the handwriting, thereby yielding a dynamic feature 31 of the handwriting of the user. In other words, a (or the) dynamic feature can be the average stroke length. In examples, the one or more stroke lengths may (also) be used in the handwriting-to-text algorithm, i.e. for recognizing the text.

In examples, the one or more sensors 230 and/or the dynamics algorithm are configured to measure, as writing (i.e. the handwriting of the user) progresses, stroke durations and to compute an average stroke duration over the stroke durations used in the handwriting, thereby yielding a dynamic feature 31 of the handwriting of the user. In other words, a (or the) dynamic feature may be the average stroke duration. In examples, the stroke durations may (also) be used in the handwriting-to-text algorithm, i.e. for recognizing the text.

As further examples, the average writing pressure, the average stroke length, and the average stroke duration may be taken to be three dynamic features (or can be combined to form one three-dimensional dynamic feature). Likewise, any two out of the average writing pressure, the average stroke length, and the average stroke may be taken to be two dynamic features (or can be combined to form one two-dimensional dynamic features). Other dynamic features may be computed e.g. from averaging stroke lengths over words represented in the handwriting and/or from averaging stroke durations over words represented in the handwriting. In examples, any combination (i.e. two or three out of) writing pressures, stroke lengths and stroke durations may (also) be used in the handwriting-to-text algorithm, i.e. for recognizing the text.

In an example, the chatbot may be a chatbot tutorial. Such a chatbot tutorial can be used in teaching and education. The at least one chatbot statement 20 may comprise or be a question to be answered in terms of the at least one input statement 30 of the user of the chatbot system 200. The question can for example be an initial question (e.g. on tier 1 of the tutorial list) or a non-initial question (e.g. on tier 2 to N of the tutorial list).

Alternatively, or in addition, the at least one chatbot statement 20 may comprise or be a hint on how to answer a question to be answered in terms of the at least one input statement 30 of the user of the chatbot system 200. Such a hint may e.g. follow a question that has been posed earlier in the chatbot conversation but that could not be answered correctly by the user of the chatbot system 200. On the other hand, a hint may be requested (any time) by the user via the user interface 210 of the system.

The at least one input statement 30 may comprise (or be) or may be deemed to comprise (or be) an answer to the question. The question may have at least one target answer 13. The at least one target answer is used to assess whether or not the answer to the question deemed to be contained in the at least one input statement 30 is correct. As an example, assessment may be based on a string comparison evaluating a congruence between the answer to the question and the one or more target answers. The one or more target answers 13 may be given in terms of a list comprising a target input statement for each target answer 13, or in terms of a data structure of target answer information, and a target answer algorithm configured to generate at least one target input statement based on the target answer information. In addition, the data structure can be equipped with test-an-answer functionalities, thus representing an object in object-oriented programming.

Producing 140 the at least one further chatbot statement 40 may comprise applying a correctness assessment algorithm configured to determine 141 a correctness rating 143 measuring a congruence of the at least one input statement 30 and the one or more target answers. As an example, the correctness assessment algorithm may take pre-defined keywords from the at least one target answer 13 such as "England", "1066", "Battle of Hastings" and confirm their presence or absence in the at least one input statement 30. The correctness rating 143 can e.g. be a real number in the interval [0, 1]. In examples, the correctness rating 143 can be binary, e.g. in the set {0, 1}. The correctness assessment algorithm may invoke one or more test-an-answer functionalities.

In examples, applying the correctness assessment algorithm can be an intermediate step after receiving 130 the at least one input statement 30 from the user via the user and before producing 140 the at least one further chatbot statement 40.

Producing 140 the at least one further chatbot statement 40 may comprise applying a user quality assessment classifier algorithm configured to classify the writing dynamics vector, thereby determining 142 a class of user quality rating 144. In examples, applying the user quality assessment classifier algorithm can be an/another intermediate step after receiving 130 the at least one input statement 30 from the user via the user and before producing 140 the at least one further chatbot statement 40. As an example, the user quality assessment classifier algorithm can be a pre-trained machine learning algorithm.

Qualities are properties of written language which indicate certain meanings, styles or tones to a user. For example, a quality may include how expert a writer seems, how authoritative they are, how child-like or old they are, their emotional state, or other. Qualities may be indicated in any aspect of writing or handwriting, including the graphical form of the handwriting, the properties of the dynamic motions used to create the handwriting, the word choice, language construction, or other. Some qualities may be easily identified by humans, while some qualities may only be easily recognized algorithmically. This is largely dependent on which aspects of the writing the quality indicates. As an example, simplistic word use is easily recognizable by a human as being "child-like", but subtle changes in applied pressure may only indicate domain expertise level to an automated system. A key focus can be the quality of domain expertise.

Classification of the writing dynamics vector may be binary, again e.g. in the set {0, 1}. For example, classification of the writing dynamics may relate to domain expertise of the user, or to confidence of the user, or to a combination of domain expertise and confidence of the user. The class of user quality rating 144 can then, for example, be either "expert" or "non-expert", and/or either "confident" or "non-confident". Such classes can be numerically represented e.g., in the set {0, 1} or in the set {0, 1, 2, 3}, respectively.

As an example, a chatbot quality rating 145 may be determined for the class of user quality rating 144 based on a complementary quality lookup table. The chatbot quality rating 145 may also be binary. The chatbot quality rating 145 relates to a style (e.g. an educational, psychological, and/or linguistic style) of the at least one further chatbot statement 40. As an example, the chatbot quality rating 145 is either "authoritative" or "non-authoritative".

While the user quality rating 144 relates to the user, the chatbot quality rating 145 can be seen as an appropriate choice of chatbot reply to the user. On the other hand, a chatbot quality rating 145 can be the class of user quality rating 144. In other words, applying the complementary quality lookup table can be bypassed because the translation by this table can be integrated into the quality assessment classifier algorithm. Such can be done for example by training the quality assessment classifier algorithm not towards predicting the class of user quality rating 144 but on the (class of) chatbot quality rating 145.

Producing 140 the at least one further chatbot statement 40 at least based on the at least one dynamic feature 31 of the handwriting of the user may comprise applying a tutorial algorithm configured to select 146 or generate 147 the at least one further chatbot statement 40 based on the correctness rating 143 and the chatbot quality rating 145.

In examples, producing 110 the at least one chatbot statement 20 may comprise selecting a predetermined question 11 from a predetermined tutorial list 10 comprising one or more ordered tiers, and e.g. applying a chatbot style transfer algorithm configured to transform the predetermined question 11 to a style-transformed predetermined question in a chatbot quality corresponding to another chatbot quality rating, wherein each tier may comprise at least one predetermined question 11 and at least one corresponding predetermined target answer 13, thereby selecting a current tier corresponding to the predetermined question 11 and producing 110 the at least one chatbot statement 20. The question may be the selected and/or style-transformed predetermined question, and the at least one target answer may be the at least one predetermined target answer 13 corresponding to the selected predetermined question.

In examples, producing 110 the at least one chatbot statement 20 may comprise selecting a predetermined hint 12 from a predetermined tutorial list 10 comprising one or more ordered tiers, and e.g. applying a chatbot style transfer algorithm configured to transform the predetermined hint 12 to a style-transformed predetermined hint in a chatbot quality corresponding to another chatbot quality rating, wherein each tier may comprise at least one predetermined hint 12 corresponding to a predetermined question 11, thereby selecting a current tier corresponding to the predetermined hint 12 and producing 110 the at least one chatbot statement 20. The hint may be the selected and/or style-transformed predetermined hint.

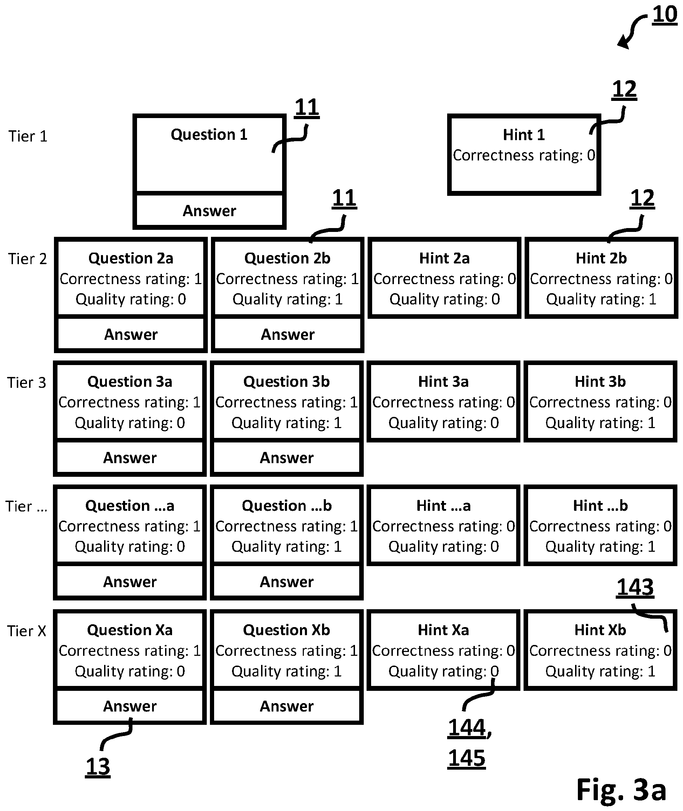

Example tutorial lists 10 are schematically illustrated in **Fig. 3a****-b**. The other chatbot quality rating may result from repeating the computer-implemented method 100. In fact, as an example, a chatbot conversation may start with a chatbot statement by selecting a predetermined question and/or a predetermined hint from tier 1 of the tutorial list. At this stage neither a user quality rating 144 nor a chatbot quality rating 145 is available. On the other hand, the method 100 can be repeated provided that outputting the at least one further chatbot statement functions as outputting another at least one chatbot statement to prompt at least another input statement from the user. In so doing, also the at least one chatbot statement may be selected 146 or generated 147 based on a (e.g. the other) chatbot quality rating 145 inferred from the at least another input statement from the user.

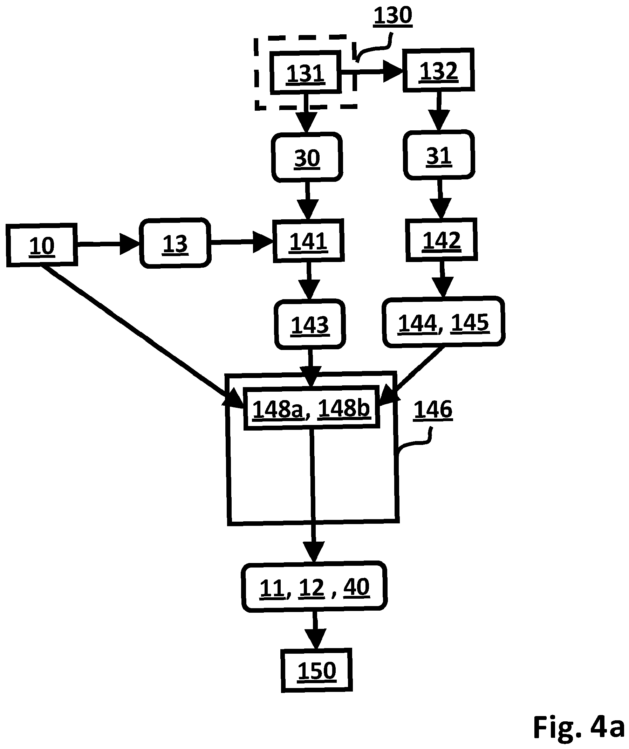

In an embodiment, schematically illustrated in **Fig. 4a**, of the computer-implemented method according to the first aspect for a chatbot based on a (predetermined) tutorial list 10, each tier (of the X tiers or of tiers 2 to X, wherein X is the number of all tiers) of the tutorial list 10 may comprise n predetermined questions 11 with corresponding predetermined target answers 13 (e.g. at least one corresponding predetermined target answer 13 for each predetermined question 11) and m predetermined hints 12, wherein n is the number of classes of qualities rating, and wherein the n predetermined questions 11 correspond to different chatbot quality ratings, and wherein the m predetermined hints 12 correspond to the different chatbot quality ratings, wherein e.g. m is equal to n. As an example, **Fig. 3a** shows an embodiment of a tutorial list 10 for a binary correctness rating 143 and with n=m=2 for all tiers except the first tier. The possibility of opting for (a class of) predetermined questions 11 or (a class of) predetermined hints 12 may correspond to the two possible outcomes of a binary (here in the sense of having two classes regardless of whether or not they are labeled with 0 or 1) correctness rating 143. Furthermore, choosing m to be equal to n, wherein m=n corresponds to the number of classes of the chatbot quality rating, allows for selecting a predetermined question 11 or a predetermined hint 12 within the class of predetermined questions 11 or the class of predetermined hints 12, respectively. On the other hand, in case of a non-binary correctness rating 143, the tutorial list 10 may be generalized so as to have predetermined statements each of which representing either a predetermined question 11 or a predetermined hint 12, wherein for each tier one predetermined statement can be chosen based in part (because it may be also based on the chatbot quality rating 145) on the outcome of the non-binary correctness rating 143.

In examples, unlike in **Fig. 3a**, the one or more predetermined hints 12 corresponding to the one or more predetermined questions 11 of a given tier (e.g. tier x) may be arranged on the tier next to the given tier (e.g. on tier x+1).

In examples, selecting 146 the at least one further chatbot statement 40 based on the correctness rating 143 and the chatbot quality rating 145 may comprise selecting 148a the predetermined question 11 corresponding to the chatbot quality rating 145 from a tier next to the current tier of the tutorial list 10, if the correctness rating 143 indicates congruence of the at least one input statement 30 and the one or more target answers, or selecting 148b the predetermined hint 12 corresponding to the chatbot quality rating 145 from the current tier of the tutorial list 10, if the correctness rating 143 indicates lack of congruence of the at least one input statement 30 and the one or more target answers, thereby selecting 146 the at least one further chatbot statement 40. If the next tier to the current tier of the tutorial list 10 does not exist, the chatbot tutorial may terminate. On the other hand, in case of a non-binary correctness rating 143, the decision of selecting one of the predetermined statements from either the current tier or the tier next to the current tier may also depend on the outcome of the non-binary correctness rating 143.

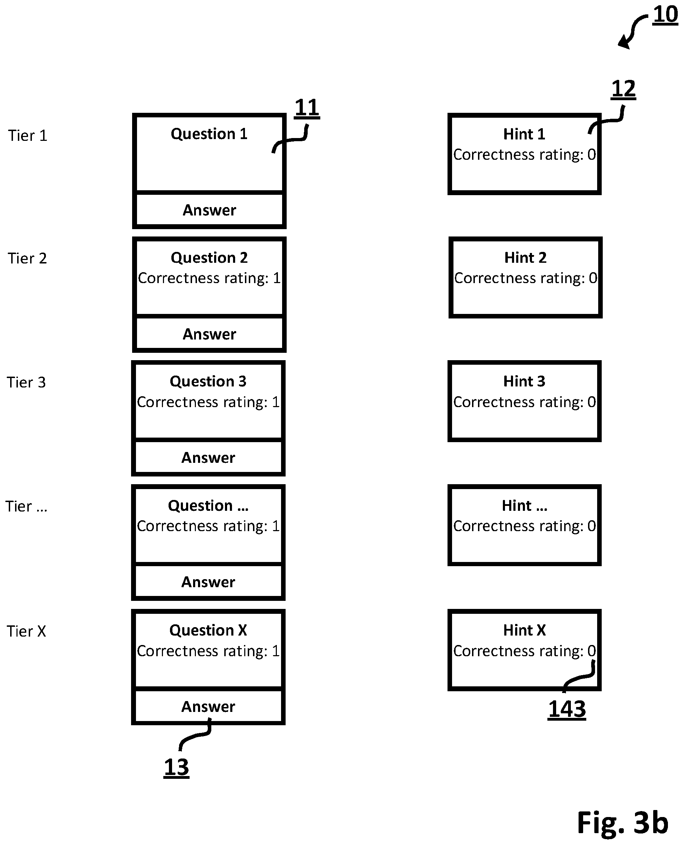

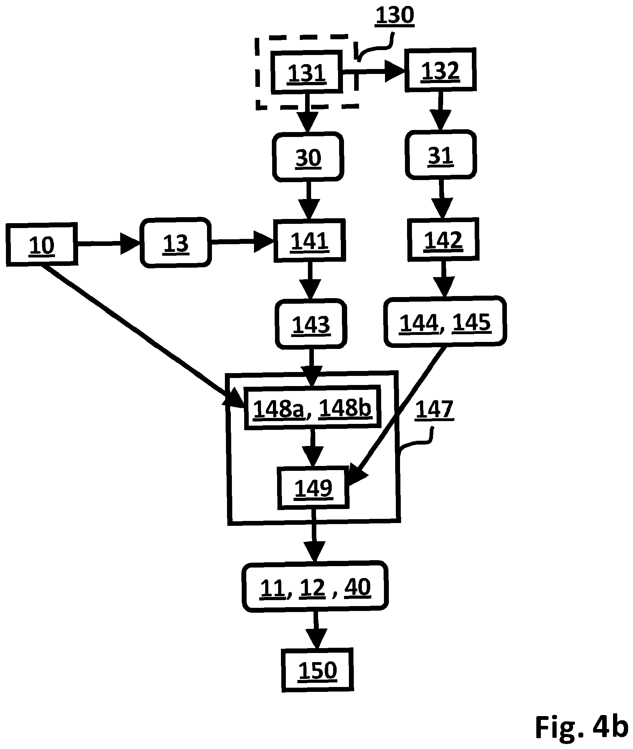

In an embodiment, schematically illustrated in **Fig. 4b**, of the computer-implemented method according to the first aspect for a chatbot based on a (predetermined) tutorial list 10 and using style transformation, each tier of the tutorial list 10 may comprise one predetermined question 11 with at least one corresponding predetermined target answer 13 and one predetermined hint 12. **Fig. 3b** shows an embodiment of the tutorial list 10 with n=m=1. As in the aforementioned embodiment, the possibility of opting for a predetermined question 11 or a predetermined hint 12 may correspond to the two possible outcomes of a binary (here again in the sense of having two classes regardless of whether or not they are labeled with 0 or 1) correctness rating 143. In this embodiment, the number n (being 1) of predetermined questions 11 and the number m (being 1) of predetermined hints 12 is independent of the outcome of the chatbot quality rating 145. As detailed below, this is because a predetermined question 11 and/or a predetermined hint 12 undergoes style transformation 149 based on the chatbot quality rating 145. On the other hand, again in case of a non-binary correctness rating 143, the tutorial list 10 may be generalized so as to have predetermined statements each of which representing either a predetermined question 11 or a predetermined hint 12, wherein for each tier one predetermined statement can be chosen based on the outcome of the non-binary correctness rating 143 before undergoing style transformation 149. Thanks to the chatbot style transfer the complexity of the tutorial list can be reduced as compared to the case with arbitrary integers n or m wherein the complexity of the tutorial list scales badly with n and/or m.

In examples, unlike in **Fig. 3b**, the predetermined hint 12 corresponding to the predetermined question 11 of a given tier (e.g. tier x) can be arranged on the tier next to the given tier (e.g. on tier x+1).

The one predetermined question 11 and the one predetermined hint 12 for each tier of the tutorial list 10 may be written in a neutral chatbot quality. This may alleviate style transfer, e.g. from the neutral style to an authoritative style.

In examples, generating 147 the at least one further chatbot statement 40 based on the correctness rating 143 and the chatbot quality rating 145 may comprise selecting 148a the predetermined question 11 from a tier next to the current tier of the tutorial list 10, if the correctness rating 143 indicates congruence of the at least one input statement 30 and the one or more target answers, or selecting 148b the predetermined hint 12 from the current tier of the tutorial list 10, if the correctness rating 143 indicates lack of congruence of the at least one input statement 30 and the one or more target answers, thereby selecting at least one further preliminary chatbot statement. If the next tier to the current tier of the tutorial list 10 does not exist, the chatbot tutorial may terminate. On the other hand, in case of a non-binary correctness rating 143, the decision of selecting one of the predetermined statements from either the current tier or the tier next to the current tier may also depend on the outcome of the non-binary correctness rating 143.

Generating 147 the at least one further chatbot statement 40 based on the correctness rating 143 and the chatbot quality rating 145 may comprise applying the chatbot style transfer algorithm configured to transform 149 the at least one further preliminary chatbot statement to a statement in a chatbot quality corresponding to the chatbot quality rating 145. The chatbot style transfer algorithm may comprise a set of auto-encoder neural networks, wherein each of the auto-encoder neural networks is pre-trained to perform on the at least one further preliminary chatbot statement a style transfer corresponding to a different chatbot quality rating.

The method 100 of the first aspect (or an embodiment thereof) may further comprise repeating 160 the method provided that outputting 150 the at least one further chatbot statement 40 functions as outputting another at least one chatbot statement 20 to prompt at least another input statement from the user. In so doing, a given path in the tutorial list 10 can be worked through, as depicted by framed boxes representing predetermined questions 11 or predetermined hints 12 in the tutorial list 10 of **Fig. 5**.

The chatbot system 200 may, as schematically illustrated in **Fig. 2**, comprise a user interface 210 configured to enable a user of the chatbot system 200 to interact with the chatbot system 200 via handwriting. Handwriting may comprise writing by pen or without a pen (i.e. finger writing). The system 200 of claim 43, may further be configured to run the computer-implemented method 100 for a chatbot according to the first aspect (or an embodiment thereof). In order to do so, the system 200 may comprise at least one processor and at least one memory and/or at least one storage.

In an embodiment, the chatbot system P1, 200 and/or the user interface 210 may comprise a handwriting instrument P2 including a body P3 extending longitudinally between a first end P4 and a second end P5, the first end P4 having a writing tip P6 which is able to write on a support, the handwriting instrument P2 further including at least one motion sensor P7 configured to acquire data on the handwriting of the user when the user is using the handwriting instrument P2. The chatbot system P1, 200 and/or the user interface 210 may comprise a calculating unit P8 communicating with the motion sensor P7 and configured to analyze the data by an artificial intelligence model trained to capture 131 the user's handwriting and/or to determine 132 at least one dynamic feature 31 of the handwriting of the user. The handwriting instrument P2 may be the smart pen. The support may be a non-electronic surface. For example, the non-electronic surface may be a sheet of paper or a surface of a table. (For example, an electronic surface may be a surface of a touchpad, smartphone, digital tablet.)

The user interface 210 may comprise one or more input devices 220. The user interface 210 may comprise, as an input device 220, a touch screen. Alternatively, or in addition, the user interface 210 may comprise, as an input device 220, a touchpad or a graphics tablet. The user interface 210 may comprise, as an input device 220, a pen. The user interface 210 may comprise, as an input device 220, a smart pen. The one or more input devices 220 may be configured to capture the handwriting of the user. Capturing the handwriting of the user may be understood as capturing information needed to reconstruct text represented in the handwriting of the user. The one or more input devices 220 may be configured to capture a dynamics of the handwriting of the user. Capturing the dynamics of the handwriting may be understood as capturing information needed to assess how the handwriting is carried out by the user. The one or more input devices 220 configured to capture the handwriting may comprise one or more sensors 230 capable of capturing 131 the handwriting. Furthermore, the one or more input devices 220 configured to capture the dynamics of the handwriting may comprise one or more sensors 230 capable of capturing 131 the dynamics of the handwriting. The sensors capable of capturing 131 the handwriting and/or the dynamics of the handwriting may or may not be identical. As an example, the at least one sensor 230 can be a pressure (or force) sensor in the smart pen e.g. mounted in the nib of the smart pen. Alternatively, or in addition, the at least one sensor 230 can be a pressure sensor in the touchpad or in the graphics tablet. The one or more input devices 220 may be configured to capture a stroke length and/or a stroke duration (for strokes in the handwriting of the user).

The user interface 210 may comprise a graphical output 240 such as e.g. a screen. The graphical output 240 may form part of the user interface 210. As an example, the graphical output 240 may be the touch screen (or a portion thereof).

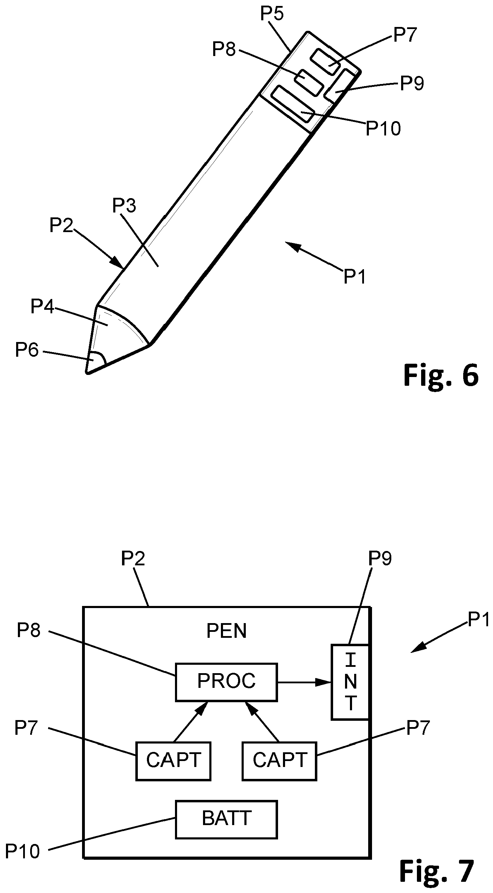

Figures 6 to 13c and the following detailed description contain elements for the handwriting instrument (e.g. being the smart pen). They can be used to enhance understanding the disclosure.

It is now referred to figures 6 to 12 illustrating embodiments of a system 200, P1 for capturing 131 the user's handwriting and/or to determining 132 at least one dynamic feature 31 of the handwriting of the user. The same reference numbers are used to describe identical elements of the system.

Figure 6 and 7 generally illustrates a system P1 according to a first embodiment of the system. The system P1 comprises a handwriting instrument P2. The handwriting instrument P2 may be a pen, a pencil, a brush or any element allowing a user to write or draw with it on a support. The support may be paper, canvas, or any surface on which a user can write or draw. The support may also be a coloring book. The support may be a non-electronic surface. In an example, the handwriting instrument P2 may be a/the smart pen.

The handwriting instrument P2 comprises a body P3 extending longitudinally between a first end P4 and a second end P5. The first end P4 comprises a writing tip P6 which is able to write on a support. The tip P6 may deliver ink or color.

The handwriting instrument P2 further includes at least one motion sensor P7. In one embodiment, the motion sensor P7 may be a three-axis accelerometer or a three-axis gyroscope.

In the illustrated embodiments on figures 6 to 12, the handwriting instrument P2 includes two motion sensors P7. In embodiments, the handwriting instrument P2 comprises two three-axis accelerometers. In embodiments, the handwriting instrument P2 comprises one three-axis accelerometer and one three-axis gyroscope.

The at least one motion sensor P7 is able to acquire data on the handwriting of the user when the user is using the handwriting instrument P2. These data are communicated to a calculating unit P8 which is configured to analyze the data and capture 131 the user's handwriting and/or determine 132 at least one dynamic feature 31 of the handwriting of the user. The calculating unit P8 may comprise a volatile memory to store the data acquired by the motion sensor P7 and a non-volatile memory to store a model enabling capturing 131 the user's handwriting and/or determining 132 at least one dynamic feature 31 of the handwriting of the user.

The handwriting instrument P2 may also comprise a short-range radio communication interface P9 allowing the communication of data between the motion sensor P7 and the calculating unit P8. In embodiments, the short-range radio communication interface is using a Wi-Fi, Bluetooth^{®}, LORA^{®}, SigFox^{®} or NBIoT network. In embodiments, the short-range radio communication interface may also communicate using a 2G, 3G, 4G or 5G network.

The handwriting instrument P2 further includes a battery P10 providing power to at least the motion sensor P7 when the user is using the handwriting instrument. The battery P9 may also provide power to the calculating unit P8 when the calculating unit is included in the writing instrument P2.

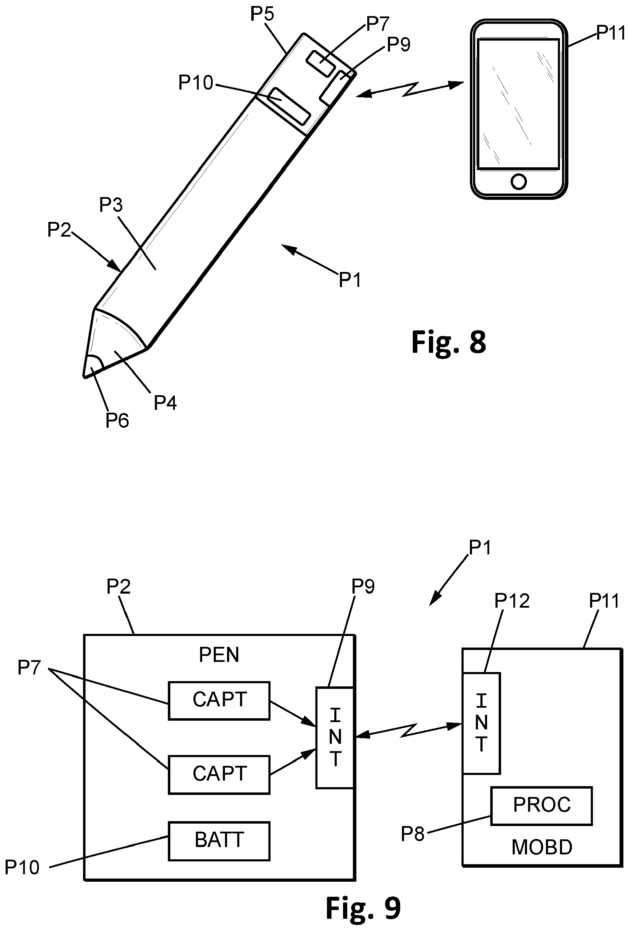

More specifically, in the embodiment of figures 8 and 9, the handwriting instrument P2 comprises the at least one motion sensor P7, the short-range radio communication interface P9 and the battery P10. The system P1 further comprises a mobile device P11, distinct from the handwriting instrument P2. The mobile device P11 may be an electronic tablet, a mobile phone or a computer. The mobile device P11 comprises the calculating unit P8. The mobile device P11 further comprises a short-range radio communication interface P12 enabling communication between the calculating unit P8 and the handwriting instrument P2.

In this embodiment, the calculating device P8 of the mobile device receives raw data acquired by the motion sensor P7 and analyzes the raw data acquired by the motion sensor P7 to capture 131 the user's handwriting and/or determine 132 at least one dynamic feature 31 of the handwriting of the user.

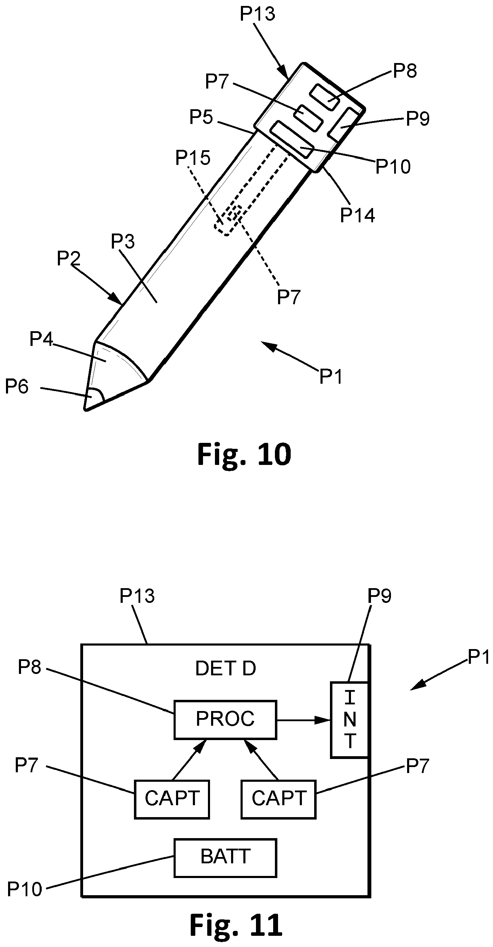

In the embodiment illustrated figures 10 and 11, the motion sensors P7, the calculating unit P8, the short-range radio communication interface P9 and the battery P10, are not embedded in the handwriting instrument P2. In this embodiment, the electronics may be comprised in a detection device P13, distinct from the handwriting instrument P2. The detection device P13 can be mounted on the second end P5 of the handwriting instrument P2.

In an embodiment, the detection device P13 comprises a body P14 designed to be mounted on the second end P5 of the handwriting instrument P2 and a protuberant tip P15 able to be inserted in the body P3 of the handwriting instrument P2. In examples, one motion sensor P7 may be provided on the protuberant tip P15 and another motion sensor P7 may be provided in the body P14 of the detection device P13. By this means, the two motions sensors P7 are able to acquire different data during the handwriting of the user.

In embodiments, the motions sensors P7 are provided in the body P14 of the detection device P13. By this means, the detection device P13 can be mounted on any type of handwriting instrument P2, without necessitating a hollow body P3 of the handwriting instrument P2.

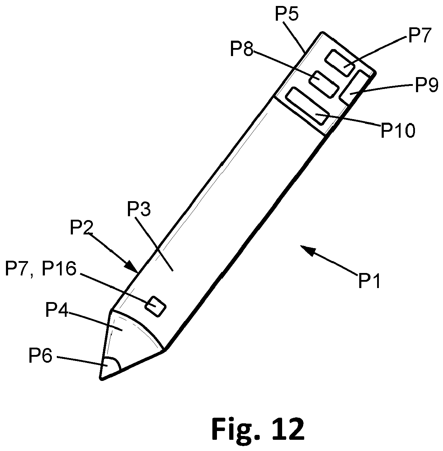

In the embodiment illustrated on figure 12, the at least one motion sensor P7, the calculating unit P8, the short-range radio communication interface P9 and the battery P10 are directly embedded in the handwriting instrument P2.

In embodiments, one motion sensor P7 may be provided close to the first end P4 of the handwriting instrument P2, while another motion sensor P7 may be provided on the second end P5 of the handwriting instrument P2.

In embodiments, the handwriting instrument P2 may also comprise a pressure sensor able to acquire data. These data can be transmitted to the calculation unit that analyze these data and the data acquired by the at least one motion sensor P7.

The pressure sensor may be embedded in the handwriting instrument P2 or in the detection device P13.

In an embodiment of the system described above, the calculating unit P8 receives data acquired from at least on motion sensor P7 and from the pressure sensor, if applicable, to analyze them and capture 131 the user's handwriting and/or determine 132 at least one dynamic feature 31 of the handwriting of the user.

More specifically, the calculating unit P8 may store an artificial intelligence model able to analyze the data acquired by the motion sensor P7. The artificial intelligence model may comprise a trained neural network.

The artificial intelligence model may comprise the at least one machine learning algorithm of the handwriting-to-text algorithm.

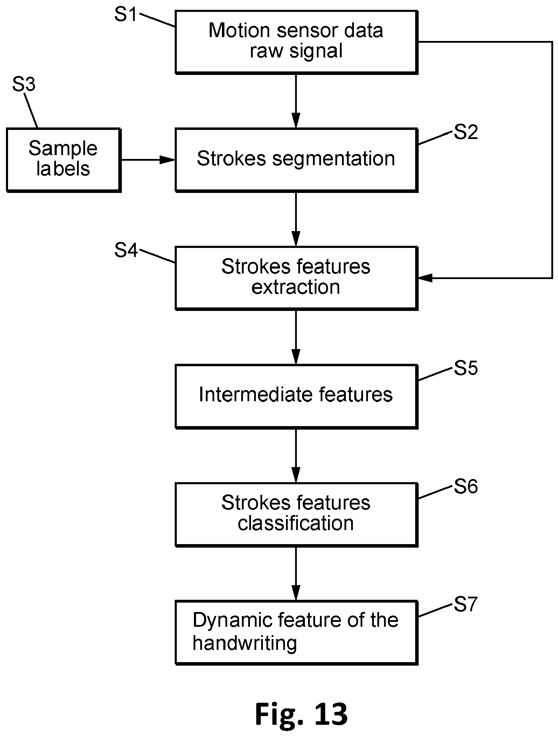

In the embodiment illustrated on figure 13, the neural network is trained according to the method of using intermediate features extraction.

More particularly, at step S1, the motion sensor P7 acquires data during the use of the handwriting instrument P2.

At step S2, the neural network receives the raw signals of the data acquired at step S1. The neural network also receives the sample labels at step S3. These labels correspond to whether or not the signal corresponds to a stroke. More precisely, the neural network is able to determine if the signal correspond to a stroke on a support. The neural network is then able to determine stroke timestamps.

More particularly, this means that the neural network is able to determine for each stroke timestamps if a stroke has actually been made on the support by the user during the use of the handwriting instrument P2.

At step S4, the calculating unit P8 performs a stroke features extraction to obtain intermediate features at step S5.

These intermediate features comprise, but are not limited to:
- total strokes duration,
- total in air stroke duration,
- strokes mean duration,
- strokes mean and peak velocity,
- number of pauses during use of the handwriting instrument,
- ballistic index, which corresponds to an indicator of handwriting fluency which measures smoothness of the movement defined by the ratio between the number of zero crossings in the acceleration and the number of zero crossings in the velocity,
- number of zero-crossing in the acceleration during strokes,
- number of zero-crossing in the velocity during strokes.

From these intermediate features, the neural network is able to derive the user's handwriting (i.e. text therefrom) and/or at least one dynamic feature of the handwriting.

At step S6, an algorithm is able to derive indications about the user's handwriting (i.e. text therefrom) and/or at least one dynamic feature of the handwriting.

This algorithm can be a learned model such as a second neural network, or a handcrafted algorithm.

In the embodiment where a learned model such as a neural network is used, the model is trained on a supervised classification task, where the inputs are stroke features with labels, and the outputs are handwriting text and/or at least one dynamic feature of the handwriting.

In the embodiment where a hand-crafted algorithm is used, the hand-crafted algorithm can compute statistics on the stroke features and compare them to thresholds found in the scientific literatures, in order to capture 131 the user's handwriting and/or determine 132 at least one dynamic feature 31 of the handwriting of the user.

Finally, at step S7, the system is able to capture 131 the user's handwriting and/or determine 132 at least one dynamic feature 31 of the handwriting of the user.

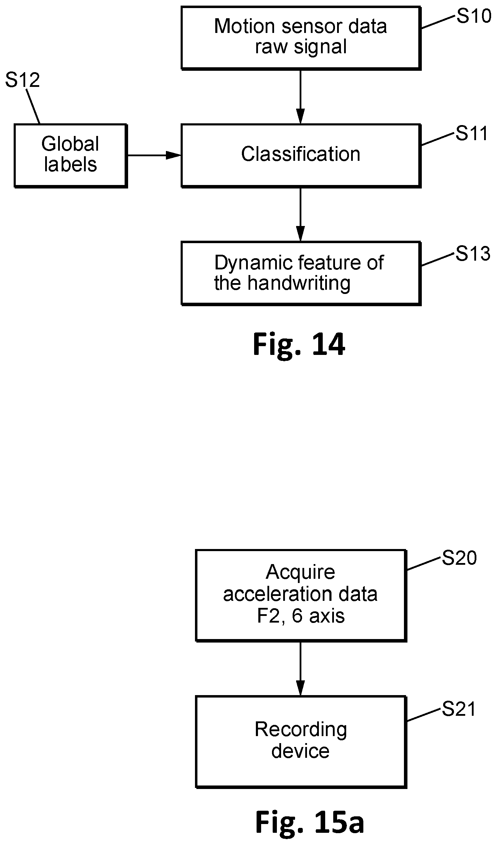

In the embodiment illustrated on figure 14, the neural network is trained according to the method of end-to-end classification.

According to this embodiment, at step S10, the data are acquired by the motion sensor P7.

The classification is made in step S11. To learn the classification task, the neural network receives the raw signal of the data acquired by the motion sensor P7 and global labels (step S12). The global labels correspond to the handwriting and/or the dynamic features thereof to be detected by the neural network.

In step S13, the neural network delivers the result.

The trained neural network described in reference with figures 13 and 14 is stored.

The neural network can be stored in the calculating unit 13.

Figures 15A to 15C illustrate more specifically the embodiment of the system described with reference to figure 13.

In order of segment the strokes (step S2 of figure 13), the neural network may determine the timestamps of the strokes on the support.

This information can be detected by a stroke sensor P16. The stroke sensor P16 may be embedded in the handwriting instrument or in the detection device P13 mounted on the handwriting instrument.

In embodiments, the stroke sensor P16 may be a pressure sensor, a contact sensor or a vibration sensor. Then, the neural network receives the data collected by the stroke sensor P16 at step S3.

In the embodiment illustrated figures 15A to 15C, the stroke sensor P16 is the motion sensor P7. More specifically, the motion sensor P7 may be a three-axis accelerometer.

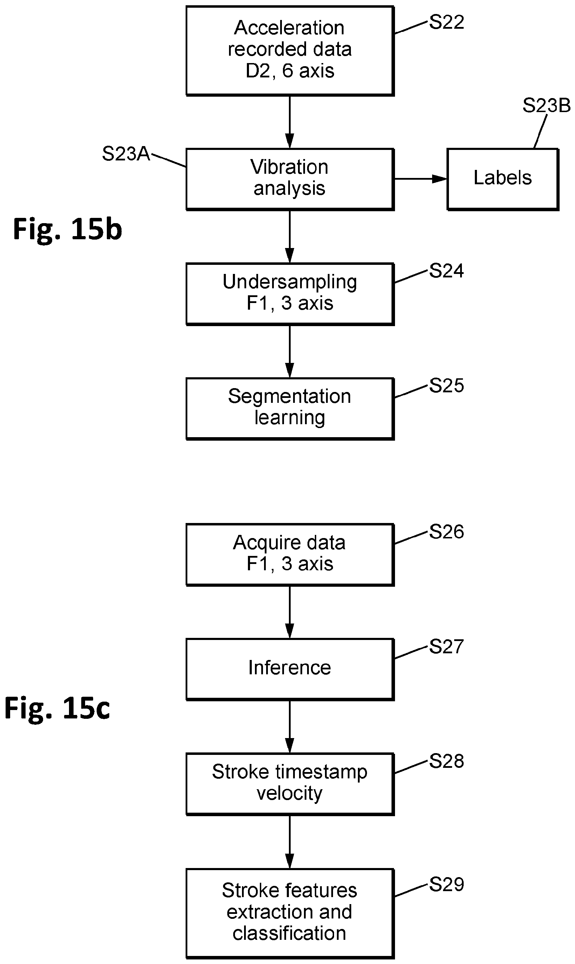

Figure 15A illustrates the collect of data used during the training phase of the neural network, which is illustrated figure 15B. Finally, figure 15C illustrates the inference of the neural network by a user of the handwriting instrument.

To use the motion sensor P7 as the stroke sensor P16, the accelerometer first need to be set such that its sample rate is at least twice superior to the maximum frequency of the vibrations to be detected.

In examples, the accelerometer is highly sensitive. To allow detection of the vibrations by the accelerometer, the accelerometer may be bound to the writing tip P6 of the handwriting instrument P2 by rigid contacts with little damping.

In embodiments, it is possible to enhance the precision of the vibration detection by using a support presenting a rough surface with known spatial frequency.

In figure 15A, representing the collect phase, the accelerometer is set with a sample rate F2. While the user is using the handwriting instrument P2, the accelerometer acquires data at step S20. These data can be sent by short-range radio to a recording device at step S21.

In embodiments, during the collect phase, if the handwriting instrument P2 also comprises a three-axis gyroscope as another motion sensor P7, the three-axis gyroscope can also acquire data that are sent to the recording device at step S21.

Figure 15B illustrates the training phase of the neural network.

At step S22, the data sent to the recording device are provided. The data are analyzed at step S23A to determine the labels (step S23B). For example, the labels comprise the strokes timestamps, detected when vibration is detected in the data, and the stroke velocity. The stroke velocity is advantageously determined using the acceleration data and the high frequencies contained in the vibration.

Step S24 comprises the undersampling of the data. Particularly, during the preceding steps, the frequency of the accelerometer was set to be higher than the one set for the inference phase. Moreover, the vibration analysis was made on the basis of the three-axis accelerometer and the three-axis gyroscope. However, the constant use of the gyroscope leads to high energy consumption.

The undersampling step S24 may comprise the degradation of the parameters. Frequency F2 of the accelerometer is reduced to a frequency F1, smaller than F2, and the training is made only according to three-axis detection.

At step S25, the neural network is trained to be able to perform strokes segmentation, as described with reference to figure 13, step S2.

Figure 15C illustrates the inference phase. In this phase, the neural network is trained to capture the handwriting and/or at least one dynamic feature of the handwriting by means of strokes segmentation.

At step S26, a user is using the handwriting instrument P2 in view of capturing the handwriting and/or at least one dynamic feature of the handwriting.

The accelerometer in the handwriting instrument is set to the frequency F1 and the data are acquired according to three-axis.

At step S27, the trained neural network is fed with the acquired data. At step S28, the neural network is able to deliver the strokes timestamps and the velocity.

Finally, the neural network is able to perform the intermediate stroke feature extraction and the classification at step S29. Step S29 actually corresponds to steps S4 to S7, already described with reference to figure 13.

In embodiments, the neural network may be trained continuously with the data acquired by the user of the handwriting pen P2 after the storage of the neural network.

More specifically, the neural network may be able to determine if a sequence of strokes correspond to a letter or a number.

To this end, the neural network can also be fed with a large data base of letters and numbers. Each letter and numbers can be associated with a sequence of strokes. The sequence of strokes can correspond to acceleration signals acquired by the accelerometer during the collect phase when forming the letters and numbers.

The labels to be determined by the neural network may be the direction and an order of the sequence of strokes for each letter and number.

In step S5 of figure 13, the intermediate features can then also comprise the temporal sequence of strokes and their direction.

In step S7, the neural network is able to determine letters and numbers and, hence, text from the handwriting. Alternatively, or in addition, the neural network is able to determine at least one dynamic feature of the handwriting.

Although the present invention has been described above and is defined in the attached claims, it should be understood that the invention may alternatively be defined in accordance with the following embodiments:
1. A computer-implemented method (100) for operating a chatbot, comprising:
   - producing (110) at least one chatbot statement (20);
   - outputting (120), via a user interface (210) of a chatbot system (200), the at least one chatbot statement (20) to prompt at least one input statement (30) from a user;
   - receiving (130) the at least one input statement (30) from the user via the user interface, wherein the user interface (210) comprises a smart pen and the at least one input statement (30) is received (130) via the smart pen;
   - producing (140) at least one further chatbot statement (40);
   - outputting (150), via the user interface, the at least one further chatbot statement (40);
      wherein receiving (130) the at least one input statement (30) from the user via the smart pen comprises capturing (131) a handwriting of the user, and
      wherein the method (100) comprises determining (132) at least one dynamic feature (31) of the handwriting of the user; and
      wherein producing (140) the at least one further chatbot statement (40) is at least in part based on the at least one dynamic feature (31) of the handwriting of the user.
2. The method of embodiment 1, wherein capturing (131) the handwriting of the user comprises:
   - recording, as the handwriting of the user progresses, at least one time series of data of one or more sensors (230) of the user interface (210);
   - applying the at least one time series of data of the one or more sensors to a handwriting-to-text algorithm configured to recognize a text represented by the handwriting;
   thereby capturing (131) the handwriting.
3. The method of embodiment 2, wherein recognizing the text represented by the handwriting comprises segmenting the at least one time series of data of the one or more sensors (230) into one or more handwriting portions representing, in the handwriting, one or more sentences, one or more words, and/or one or more characters.
4. The method of embodiment 3, wherein the one or more handwriting portions are identified with the one or more sentences, the one or more words, and/or the one or more characters based on a predetermined mapping, thereby recognizing the text.
5. The method of one of the embodiments 2 to 4, wherein the handwriting-to-text algorithm comprises at least one machine learning algorithm configured and trained for recognizing the text.
6. The method of embodiment 3, wherein the handwriting-to-text algorithm comprises at least one machine learning algorithm configured and trained for segmenting the at least one time series of data of the one or more sensors (230) into the one or more handwriting portions representing, in the handwriting, the one or more sentences, the one or more words, and/or the one or more characters.
7. The method of embodiment 4, wherein the handwriting-to-text algorithm comprises at least one machine learning algorithm configured and trained for identifying the one or more handwriting portions with the one or more sentences, the one or more words, and/or the one or more characters.
8. The method of one of the preceding embodiments, when dependent on embodiment 2, wherein determining (132) the at least one dynamic feature (31) of the handwriting of the user comprises:
   - applying the at least one time series of data of the one or more sensors (230) to a writing dynamics algorithm configured to determine one or more dynamic features (31) of the handwriting of the user;
   thereby outputting a writing dynamics vector, wherein entries of the writing dynamics vector correspond to respective one of the one or more dynamic features (31) of the handwriting of the user.
9. The method of embodiment 8, wherein one of the one or more sensors (230) is a pressure sensor configured to measure, as the handwriting of the user progresses, one or more writing pressures, and wherein the writing dynamics algorithm is configured to compute an average writing pressure over the writing pressures used in the handwriting, thereby yielding a dynamic feature (31) of the handwriting of the user.
10. The method of embodiment 8 or 9, wherein the one or more sensors (230) and/or the dynamics algorithm are configured to measure, as the handwriting of the user progresses, one or more stroke lengths and to compute an average stroke length over the one or more stroke lengths used in the handwriting, thereby yielding a dynamic feature (31) of the handwriting of the user.
11. The method of one of the embodiments 8 to 10, wherein the one or more sensors (230) and/or the dynamics algorithm are configured to measure, as the handwriting of the user progresses, stroke durations and to compute an average stroke duration over the stroke durations used in the handwriting, thereby yielding a dynamic feature (31) of the handwriting of the user.
12. The method (100) of one of the preceding embodiments, wherein the chatbot is a chatbot tutorial.
13. The method (100) of one of the preceding embodiments, wherein the at least one chatbot statement (20) comprises or is a question to be answered in terms of the at least one input statement (30) of the user of the chatbot system (200).
14. The method (100) of one of the embodiments 1 to 12, wherein the at least one chatbot statement (20) comprises or is a hint on how to answer a question to be answered in terms of the at least one input statement (30) of the user of the chatbot system (200).
15. The method (100) of embodiment 13 or 14, wherein the at least one input statement (30) is deemed to comprise or be an answer to the question.
16. The method (100) of one of the embodiments 13 to 15, wherein the question has at least one target answer (13).
17. The method (100) of embodiment 16, wherein the one or more target answers (13) are given in terms of:
   - a list comprising a target input statement for each target answer (13); or
   - in terms of a data structure of target answer information, and a target answer algorithm configured to generate at least one target input statement based on the target answer information.
18. The method (100) of embodiment 16 or 17, wherein producing (140) the at least one further chatbot statement (40) comprises applying a correctness assessment algorithm configured to determine (141) a correctness rating (143) measuring a congruence of the at least one input statement (30) and the one or more target answers.
19. The method (100) of embodiment 18, wherein the correctness rating (143) is binary.
20. The method (100) of one of the preceding embodiments, when dependent on embodiment 8, wherein producing (140) the at least one further chatbot statement (40) comprises applying a user quality assessment classifier algorithm configured to classify the writing dynamics vector, thereby determining (142) a class of user quality rating (144) .
21. The method (100) of embodiment 20, wherein the user quality assessment classifier algorithm is a pre-trained machine learning algorithm.
22. The method (100) of embodiment 20 or 21, wherein classification of the writing dynamics vector is binary.
23. The method (100) of one of the embodiments 20 to 22, wherein classification of the writing dynamics relates to a domain expertise and/or confidence of the user.
24. The method (100) of embodiment 23, wherein the class of user quality rating (144) is either "expert" or "non-expert", and/or either "confident" or "non-confident".
25. The method (100) of one of the embodiments 20 to 24, wherein a chatbot quality rating (145) is determined for the class of user quality rating (144) based on a complementary quality lookup table.
26. The method (100) of embodiment 25, wherein the chatbot quality rating (145) is binary.
27. The method (100) of embodiment 25 or 26, wherein the chatbot quality rating (145) relates to a style of the at least one further chatbot statement (40).
28. The method (100) of one of the embodiments 25 to 27, wherein the chatbot quality rating (145) is either "authoritative" or "non-authoritative".
29. The method (100) of one of the embodiments 20 to 24, wherein a chatbot quality rating (145) is the class of user quality rating (144).
30. The method (100) of one of the embodiments 25 to 29, when dependent on embodiment 18, wherein producing (140) the at least one further chatbot statement (40) at least based on the at least one dynamic feature (31) of the handwriting of the user comprises applying a tutorial algorithm configured to select (146) or generate (147) the at least one further chatbot statement (40) based on the correctness rating (143) and the chatbot quality rating (145).
31. The method (100) of one of the embodiments 1 to 30, wherein producing (110) the at least one chatbot statement (20) comprises:
   - selecting a predetermined question (11) from a predetermined tutorial list (10) comprising one or more ordered tiers; and
   - applying a chatbot style transfer algorithm configured to transform the predetermined question (11) to a style-transformed predetermined question in a chatbot quality corresponding to another chatbot quality rating;
   wherein each tier comprises at least one predetermined question (11) and at least one corresponding predetermined target answer (13), thereby selecting a current tier corresponding to the predetermined question (11) and producing (110) the at least one chatbot statement (20).
32. The method (100) of embodiment 31, when dependent on embodiments 13 and 16, wherein the question is the selected and/or style-transformed predetermined question, and wherein the at least one target answer is the at least one predetermined target answer (13) corresponding to the selected predetermined question.
33. The method (100) of one of the embodiments 1 to 30, wherein producing (110) the at least one chatbot statement (20) comprises:
   - selecting a predetermined hint (12) from a predetermined tutorial list (10) comprising one or more ordered tiers; and
   - applying a chatbot style transfer algorithm configured to transform the predetermined hint (12) to a style-transformed predetermined hint in a chatbot quality corresponding to another chatbot quality rating;
   wherein each tier comprises at least one predetermined hint (12) corresponding to a predetermined question (11), thereby selecting a current tier corresponding to the predetermined hint (12) and producing (110) the at least one chatbot statement (20).
34. The method (100) of embodiment 33, wherein the hint is the selected and/or style-transformed predetermined hint.
35. The method (100) of one of the embodiments 31 to 34, when dependent on embodiment 25 or 29, wherein each tier of the tutorial list (10) comprises n predetermined questions (11) with corresponding predetermined target answers (13) and m predetermined hints (12), wherein n is the number of classes of qualities rating, and wherein the n predetermined questions (11) correspond to different chatbot quality ratings, and wherein the m predetermined hints (12) correspond to the different chatbot quality ratings, m being equal to n.
36. The method (100) of embodiment 35, when dependent on embodiments 18 and 30, wherein selecting (146) the at least one further chatbot statement (40) based on the correctness rating (143) and the chatbot quality rating (145) comprises:
   - selecting (148a) the predetermined question (11) corresponding to the chatbot quality rating (145) from a tier next to the current tier of the tutorial list (10), if the correctness rating (143) indicates congruence of the at least one input statement (30) and the one or more target answers; or
   - selecting (148b) the predetermined hint (12) corresponding to the chatbot quality rating (145) from the current tier of the tutorial list (10), if the correctness rating (143) indicates lack of congruence of the at least one input statement (30) and the one or more target answers;
   thereby selecting (146) the at least one further chatbot statement (40).
37. The method (100) of one of the embodiments 31 to 34, wherein each tier of the tutorial list (10) comprises one predetermined question (11) with at least one corresponding predetermined target answer (13) and one predetermined hint (12).
38. The method (100) of embodiment 37, where the one predetermined question (11) and the one predetermined hint (12) for each tier of the tutorial list (10) are written in a neutral chatbot quality.
39. The method (100) of embodiment 37 or 38, when dependent on embodiments 18 and 30, wherein generating (147) the at least one further chatbot statement (40) based on the correctness rating (143) and the chatbot quality rating (145) comprises:
   - selecting (148a) the predetermined question (11) from a tier next to the current tier of the tutorial list (10), if the correctness rating (143) indicates congruence of the at least one input statement (30) and the one or more target answers; or
   - selecting (148b) the predetermined hint (12) from the current tier of the tutorial list (10), if the correctness rating (143) indicates lack of congruence of the at least one input statement (30) and the one or more target answers;
   thereby selecting at least one further preliminary chatbot statement.
40. The method (100) of embodiment 39, wherein generating (147) the at least one further chatbot statement (40) based on the correctness rating (143) and the chatbot quality rating (145) comprises applying the chatbot style transfer algorithm configured to transform (149) the at least one further preliminary chatbot statement to a statement in a chatbot quality corresponding to the chatbot quality rating (145).
41. The method (100) of embodiment 40, wherein the chatbot style transfer algorithm comprises a set of auto-encoder neural networks, wherein each of the auto-encoder neural networks is pre-trained to perform on the at least one further preliminary chatbot statement a style transfer corresponding to a different chatbot quality rating.
42. The method (100) of one of the preceding embodiments, further comprising repeating (160) the method provided that outputting (150) the at least one further chatbot statement (40) functions as outputting another at least one chatbot statement (20) to prompt at least another input statement from the user.
43. A chatbot system (200) comprising a user interface (210) configured to enable a user of the chatbot system (200) to interact with the chatbot system (200) via handwriting.
44. The system (200) of embodiment 43, further configured to run the computer-implemented method (100) for operating a chatbot according to one of the embodiments 1 to 42.
45. The system (200) of embodiment 43 or 44, wherein the user interface (210) comprises one or more input devices (220).
46. The system (200) of embodiment 45, wherein the user interface (210) comprises, as an input device (220), a touch screen.
47. The system (200) of embodiment 45 or 46, wherein the user interface (210) comprises, as an input device (220), a touchpad or a graphics tablet.
48. The system (200) of one of the embodiments 45 to 47, wherein the user interface (210) comprises, as an input device (220), a pen.
49. The system (200) of one of the embodiments 45 to 48, wherein the user interface (210) comprises, as an input device (220), a smart pen.
50. The system (200) of one of the embodiments 45 to 49, wherein the one or more input devices (220) are configured to capture the handwriting of the user.
51. The system (200) of one of the embodiments 45 to 50, wherein the one or more input devices (220) are configured to capture a dynamics of the handwriting of the user.
52. The system (200) of embodiment 50 or 51, when dependent on embodiment 50, wherein the one or more input devices (220) configured to capture the handwriting comprise one or more sensors (230) capable of capturing (131) the handwriting.
53. The system (200) of one of the embodiments 50 to 52, when dependent on embodiment 51, wherein the one or more input devices (220) configured to capture the dynamics of the handwriting comprise one or more sensors (230) capable of capturing (131) the dynamics of the handwriting.
54. The system (200) of embodiment 52 or 53, when dependent on embodiment 49, wherein the at least one sensor (230) is a pressure sensor in the smart pen.
55. The system (200) of one of the embodiments 52 to 54, when dependent on embodiment 47, wherein the at least one sensor (230) is a pressure sensor in the touchpad or in the graphics tablet.
56. The system (200) of one of the embodiments 52 to 55, wherein the one or more input devices (220) are configured to capture a stroke length and/or a stroke duration.
57. The system (200) of one of the embodiments 44 to 56, wherein the user interface (210) comprises a graphical output (240).
58. The system (200) of embodiment 57, when dependent on embodiment 46, wherein the graphical output (240) is the touch screen.
59. System (200, PI) of one of the embodiments 43 to 58, wherein the system (200, PI) and/or the user interface (210) comprises:
   - a handwriting instrument (P2) including a body (P3) extending longitudinally between a first end (P4) and a second end (P5), the first end (P4) having a writing tip (P6) which is able to write on a support, the handwriting instrument (P2) further including at least one motion sensor (P7) configured to acquire data on the handwriting of the user when the user is using the handwriting instrument (P2),
   - a calculating unit (P8) communicating with the motion sensor (P7) and configured to analyze the data by an artificial intelligence model trained to capture (131) the user's handwriting and/or to determine (132) at least one dynamic feature (31) of the handwriting of the user.
60. System (P1) of embodiment 59, when dependent on embodiment 49, wherein the handwriting instrument (P2) is the smart pen.
61. System (P1) of embodiment 59 or 60, when dependent embodiment 5 or 6 or 7, wherein the artificial intelligence model comprises the at least one machine learning algorithm of the handwriting-to-text algorithm.
62. System (P1) according to any of embodiments 59 to 61, wherein the motion sensor (P7) and the calculating unit (P8) are embedded in the second end (P5) of the handwriting instrument (P2).
63. System (P1) according to any of embodiment 59 to 61, wherein the motion sensor (P7) is embedded in the handwriting instrument (P2), the handwriting instrument (P2) further included a short-range radio communication interface (P9) configured to communicate raw data acquired by the motion sensor (P7) to a mobile device (P11) comprising the calculating unit (P8) via a communication interface (P12) of the mobile device (P11).
64. System (P1) according to any of embodiments 59 to 63, wherein the handwriting instrument comprises two motion sensors being:
   - three-axis accelerometers.
65. System (P1) according to any of embodiments 59 to 63, wherein the handwriting instrument comprises two motion sensors being:
   - one three-axis accelerometer and one three-axis gyroscope.
66. System (P1) according to embodiment 65, wherein the three-axis gyroscope comprises a wake-up input suited for receiving a wake-up signal from the calculating unit (P8) when a movement is detected by the three-axis accelerometer, the three-axis gyroscope being configured for switching into an active state when the wake-up signal is received.
67. System (P1) according to any of embodiments 59 to 66, further comprising a pressure sensor, wherein the calculating unit is configured to receive data acquired by the pressure sensor.
68. System (P1) according to embodiment 67, wherein the pressure sensor (230) of embodiment 54 is the pressure sensor of embodiment 67.
69. System (P1) according to any of embodiments 59 to 68, further comprising a stroke sensor (P16) configured to acquire stroke data while the user is using the handwriting instrument (P2), the artificial intelligence model being further trained with the stroke data to capture (131) the user's handwriting and/or to determine (132) at least one dynamic feature (31) of the handwriting of the user.
70. System (P1) according to embodiment 69, wherein the stroke sensor (P16) is the motion sensor (P7).
71. System (P1) according to any of embodiments 59 to 70, comprising a detection device (P13), the detection device (P13) comprising the motion sensor (P7) and the calculation unit (P8) and being mounted on the second end (P5) of the handwriting instrument.
72. System (P1) according to embodiment 71, wherein the detection device (P13) comprises a body (P14) configured to be mounted on the second end (P5) of the handwriting instrument (P2) and a protuberant tip (P15) configured to be inserted in the body (P3) of the handwriting instrument (P2).
73. System (P1) according to embodiment 72, when dependent on any of embodiments 64 to 65, wherein one of the two motion sensors is provided on the protuberant tip (P15) and another of the two motion sensors is provided in the body (P14) of the detection device (P13).
74. System (P1) according to embodiment 72, when dependent on any of embodiments 64 to 65, wherein the two motion sensors are in the body (P14) of the detection device (P13).
75. System (P1) according to any of embodiments 59 to 74, wherein the artificial intelligence model is further configured to determine when the user is actually using the handwriting instrument on the support and differentiate data corresponding to an actual use of the handwriting instrument from data acquired while the handwriting instrument is just being hold in the air.
76. System (P1) according to any of embodiments 59 to 75, wherein the handwriting instrument is a pen, a pencil a brush or any other element allowing a user to write or draw with it on the support.
77. System (P1) according to any of embodiments 59 to 76, when dependent on claim 63, wherein the artificial intelligence model is further configured to transcribe raw data acquired by the motion sensor (P7) into handwriting characters depicted on the mobile device (P11).
78. System (P1) according to any of embodiments 59 to 77, wherein the support is a non-electronic surface.

## Claims

1. A computer-implemented method (100) for operating a chatbot, comprising:
- producing (110) at least one chatbot statement (20);
- outputting (120), via a user interface (210) of a chatbot system (200), the at least one chatbot statement (20) to prompt at least one input statement (30) from a user;
- receiving (130) the at least one input statement (30) from the user via the user interface (210), wherein the user interface (210) comprises a smart pen and the at least one input statement (30) is received (130) via the smart pen;
- producing (140) at least one further chatbot statement (40);
- outputting (150), via the user interface (210), the at least one further chatbot statement (40);
wherein receiving (130) the at least one input statement (30) from the user via the smart pen comprises capturing (131) a handwriting of the user, and
wherein the method (100) comprises determining (132) at least one dynamic feature (31) of the handwriting of the user; and
wherein producing (140) the at least one further chatbot statement (40) is at least in part based on the at least one dynamic feature (31) of the handwriting of the user.

2. The method of claim 1, wherein capturing (131) the handwriting of the user comprises:
- recording, as the handwriting of the user progresses, at least one time series of data of one or more sensors (230) of the user interface (210).

3. The method of claim 2, wherein determining (132) the at least one dynamic feature (31) of the handwriting of the user comprises:
- applying the at least one time series of data of the one or more sensors (230) to a writing dynamics algorithm configured to determine one or more dynamic features (31) of the handwriting of the user;
thereby outputting a writing dynamics vector.

4. The method of claim 3, wherein one of the one or more sensors (230) is a pressure sensor configured to measure, as the handwriting of the user progresses, one or more writing pressures.

5. The method (100) of one of the preceding claims, wherein the at least one chatbot statement (20) comprises or is a question to be answered in terms of the at least one input statement (30) of the user of the chatbot system (200), and wherein the question has at least one target answer (13).

6. The method (100) of claim 5, wherein the one or more target answers (13) are given in terms of:
- a list comprising a target input statement for each target answer (13); or
- in terms of a data structure of target answer information, and a target answer algorithm configured to generate at least one target input statement based on the target answer information.

7. The method (100) of claim 5 or 6, wherein producing (140) the at least one further chatbot statement (40) comprises applying a correctness assessment algorithm configured to determine (141) a correctness rating (143) measuring a congruence of the at least one input statement (30) and the one or more target answers.

8. The method (100) of one of the preceding claims, when dependent on claim 3, wherein producing (140) the at least one further chatbot statement (40) comprises applying a user quality assessment classifier algorithm configured to classify the writing dynamics vector, thereby determining (142) a class of user quality rating (144).

9. The method (100) of claim 8, wherein a chatbot quality rating (145) is the class of user quality rating (144).

10. The method (100) of claim 9, when dependent on claim 7, wherein producing (140) the at least one further chatbot statement (40) at least based on the at least one dynamic feature (31) of the handwriting of the user comprises applying a tutorial algorithm configured to select (146) or generate (147) the at least one further chatbot statement (40) based on the correctness rating (143) and the chatbot quality rating (145).

11. The method (100) of one of the preceding claims, wherein producing (110) the at least one chatbot statement (20) comprises:
- selecting a predetermined question (11) from a predetermined tutorial list (10) comprising one or more ordered tiers; and
wherein each tier comprises at least one predetermined question (11) and at least one corresponding predetermined target answer (13), thereby selecting a current tier corresponding to the predetermined question (11) and producing (110) the at least one chatbot statement (20).

12. The method (100) of one of the claims 1 to 10, wherein producing (110) the at least one chatbot statement (20) comprises:
- selecting a predetermined hint (12) from a predetermined tutorial list (10) comprising one or more ordered tiers; and
wherein each tier comprises at least one predetermined hint (12) corresponding to a predetermined question (11), thereby selecting a current tier corresponding to the predetermined hint (12) and producing (110) the at least one chatbot statement (20).

13. The method (100) of claim 11 or 12, when dependent on claim 9, wherein each tier of the tutorial list (10) comprises n predetermined questions (11) with corresponding predetermined target answers (13) and m predetermined hints (12), wherein n is the number of classes of qualities rating, and wherein the n predetermined questions (11) correspond to different chatbot quality ratings, and wherein the m predetermined hints (12) correspond to the different chatbot quality ratings.

14. A chatbot system (200) comprising a user interface (210) configured to enable a user of the chatbot system (200) to interact with the chatbot system (200) via handwriting, wherein the chatbot system (200) is further configured to run the computer-implemented method (100) for operating a chatbot according to one of the preceding claims, wherein the chatbot system (PI, 200) and/or the user interface (210) comprises:
- a handwriting instrument (P2) including a body (P3) extending longitudinally between a first end (P4) and a second end (P5), the first end (P4) having a writing tip (P6) which is able to write on a support, the handwriting instrument (P2) further including at least one motion sensor (P7) configured to acquire data on the handwriting of the user when the user is using the handwriting instrument (P2),
- a calculating unit (P8) communicating with the motion sensor (P7) and configured to analyze the data by an artificial intelligence model trained to capture (131) the user's handwriting and/or to determine (132) at least one dynamic feature (31) of the handwriting of the user wherein the handwriting instrument (P2) is the smart pen.

15. The system (200) of claim 14, wherein the support is a non-electronic surface.
